(19) Europäisches Patentamt
European Patent Office
Office européen des brevets

(11) **EP 0 737 608 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(51) Int Cl.⁷: $B60T\ 8/18$, $G01G\ 19/08$

(21) Anmeldenummer: **96102806.5**

(22) Anmeldetag: **24.02.1996**

(54) **Verfahren zur Bestimmung des Verhältnisses zwischen der Masse eines Fahrzeugzuges und der Masse des Zugfahrzeuges**

Method for determing the weight ratio between a tractor-trailer combination and a tractor

Méthode pour déterminer le rapport entre la masse d'un convoi routier et d'un tracteur

(84) Benannte Vertragsstaaten:
**DE FR GB IT NL SE**

(30) Priorität: **10.04.1995 DE 19513509**

(43) Veröffentlichungstag der Anmeldung:
**16.10.1996 Patentblatt 1996/42**

(73) Patentinhaber: **DaimlerChrysler AG**
**70567 Stuttgart (DE)**

(72) Erfinder: **Reiner, Michael**
**70736 Fellbach (DE)**

(56) Entgegenhaltungen:
**EP-A- 0 111 636       EP-A- 0 374 484**
**EP-A- 0 445 575       EP-A- 0 532 863**
**DE-A- 3 429 184**

**Beschreibung**

Die Erfindung betrifft ein Verfahren zur Bestimmung des Verhältnisses zwischen der Masse eines Fahrzeugzuges und der Masse des Zugfahrzeugs. Ein Verfahren zur Bestimmung der Bremskraftverteilung zwischen den Achsen eines Zugfahrzeuges nach dem Oberbegriff von Anspruch 1, ist aus der EP 0 445 575 A2 bekannt.

Gemäß dieser Schrift soll eine möglichst hohe Fahrzeugverzögerung bei stabilem Fahrverhalten dadurch erreicht werden, daß die Raddrehzahlen an unterschiedlichen Achsen des Fahrzeugs einander entsprechen. Die Räder an allen Achsen sollen die Blokkiergrenze gleichzeitig erreichen. Gemäß dieser Schrift wird die Bremskraftverteilung nach der Gleichung

$$\phi = a + (b*z\_soll) = \frac{p\_VA}{p\_HA}$$

berechnet, wobei z_soll der durch die Betätigung des Bremspedals vom Fahrer vorgegebene Verzögerungswunsch für das Fahrzeug, P_VA der Bremsdruck an der Vorderachse und p_HA der Bremsdruck an der Hinterachse des Zugfahrzeugs ist. Dabei sind a und b bei jeder Fahrt bzw. bei jeder Veränderung der Beladung des Fahrzeugs neu zu bestimmende Parameter. Die Verteilungskonstante a ist der von der Betätigung des Bremspedals unabhängige Anteil der Bremskraftverteilung φ und kann beispielsweise nach dem in der gattungsgemäß zugrundegelegten Druckschrift EP 0 445 575 A2 beschriebenen Verfahren bestimmt werden, worauf ausdrücklich Bezug genommen wird.

In der nicht vorveröffentlichten DE 44 43 522 A1 bzw. EP 0 716 000 A2 ist ein Verfahren beschrieben, das es erlaubt aus den Differenzen der Raddrehzahlen von Rädern angetriebener und nicht angetriebener Achsen die Neigung der Fahrbahn in Fahrtrichtung aus einer Neigungskonstanten zu ermitteln. Die Neigungskonstante mk wird dabei aus den Raddrehzahlen in Hochschaltpausen und während stationären Phasen des angetriebenen Fahrzeugs und der dabei auftretenden Fahrzeugverzögerung nach der Gleichung

$$mk = [ds\_SPh - ds\_HSP]/[z\_SPh - z\_HSP]$$

ermittelt, wobei ds_SPh, ds_HSP die Drehzahldifferenz zwischen den Rädern einer angetriebenen Fahrzeugachse und den Rädern einer nicht angetriebenen Achse während einer stationären Phase (SPh) bzw. während einer Hochschaltpause (HSP) und z_SPh, z_HSP die entsprechenden Werte für die Fahrzeugverzögerung sind. Auf das dort beschriebene Verfahren zur Bestimmung der Neigungskonstanten mk wird ausdrücklich bezug genommen. Andererseits kann die Fahrbahnneigung auch mittels Neigungsmesser gemessen werden und aus diesen Meßwerten eine entsprechende Neigungskonstante bestimmt werden.

Bei Fahrzeugzügen ist aber für die Fahrstabilität nicht nur die Achslast und die Bremskraftverteilung zwischen den unterschiedlichen Achsen von entscheidender Bedeutung sondern auch das Verhältnis zwischen den Massen des Fahrzeugzuges und des Zugfahrzeugs.

Aufgabe der Erfindung ist es in möglichst einfacher Weise während der Fahrt des Fahrzeugzuges das Verhältnis zwischen der Masse des Fahrzeugzugs und des Zugfahrzeugs zu bestimmen.

Die Aufgabe wird bei Zugrundelegung der Merkmale des Oberbegriffs erfindungsgemäß durch die kennzeichnenden Merkmale von Anspruch 1 gelöst.

Nach Beginn einer Fahrt wird zunächst ein aktueller Wert für die Verteilungskonstante a und die Neigungskonstante mk bestimmt. Unter Verwendung fahrzeugspezifischer Parameter wird aus diesen beiden Werten das Verhältnis der Massen des Fahrzeugzuges zum Zugfahrzeug bestimmt.

Durch die Bestimmung des Verhältnisses der Massen zwischen dem Fahrzeugzug und dem Zugfahrzeug wird zunächst einmal ermöglicht, die Präsenz eines vom Zugfahrzeug gezogenen Anhängerfahrzeugs zu ermitteln. Neben Feststellung der Präsenz des Anhängers kann über das Massenverhältnis zwischen Fahrzeugzug und Zugfahrzeug auch eine Einschätzung der Fahrstabilität des Fahrzeugzuges getroffen werden. Vor sehr ungünstigen Verhältnissen kann gewarnt werden.

Ein weiterer Vorteil der Erfindung ist es, daß sowohl die Verteilungskonstante a als auch die Neigungskonstante mk während der Fahrt des Fahrzeugs ausschließlich aus fahrzeugspezifischen Parametern und aus gemessenen Werten der Raddrehzahl bestimmt werden können. Somit ist es möglich, das Verhältnis zwischen der Masse des Fahrzeugzuges und des Zugfahrzeugs allein aus Meßwerten der Raddrehzahlen und aus daraus direkt ableitbaren Größen zu bestimmen.

In äquivalenter Weise kann der Fachmann anstelle des Verhältnisses zwischen der Masse des Fahrzeugzugs und des Zugfahrzeugs auch das Verhältnis zwischen der Masse des Fahrzeugzuges und des Anhängerfahrzeugs oder das Verhältnis zwischen den Massen des Zugfahrzeugs und des Anhängerfahrzeugs ermitteln.

Gemäß einer Ausgestaltung der Erfindung ist es möglich, nicht nur das Verhältnis der Massen zueinander zu bestimmen sondern auch zumindest Schätzwerte für die Massen. Dazu ist es nur erforderlich, die Masse eines der Glieder des Fahrzeugzuges zu bestimmen. In der Regel wird dies das Zugfahrzeug sein. Seine Masse in unbeladenem Zustand ist bekannt. Weist das Fahrzeug eine Luftfederung auf, so kann aus dem erforderlichen Balgdruck auf die Achslast geschlossen werden. Aufgrund der Achslast kann auf die Zuladung geschlossen werden, so daß damit die Gesamtmasse des Fahrzeugs ermittelbar ist. Dies kann beispielsweise durch Berechnung nach der Gleichung

$$m\_zfg = m\_leer \cdot (1 + f\_z \cdot [p\_Bg - P\_Bgl]),$$

wobei m_zfg die momentane Masse des Zugfahrzeugs, m_leer die Leermasse des Zugfahrzeugs, f_z ein fahrzeugspezifischer Zuladungsfaktor, p_Bg der momentane Balgdruck und p_Bgl der Balgdruck bei leerem Fahrzeug ist, ermittelt werden. Eine alternative Möglichkeit ist es, nach der Gleichung

$$mf = \frac{M\_mot}{z\_HSP - z\_SPH} \cdot \frac{n\_mot}{v\_VA} \cdot kn,$$

wobei M_mot das Motormoment, n_Mot die Motordrehzahl, v_VA die aus den Raddrehzahlen bestimmte Vorderachsgeschwindigkeit (antriebsfreie Achse) und kn ein Normierungsfaktor ist, den Massenfaktor mf zu ermitteln, wobei dieser bei angekuppeltem Anhängerfahrzeug der Masse des Fahrzeugzuges entspricht. Die Massen der anderen Fahrzeuge des Fahrzeugzuges ergeben sich dann durch einfache Multiplikation der Masse des einen Fahrzeugs mit den ermittelten Verhältnissen zwischen den Massen.

Weitere zweckmäßige Ausgestaltungen der Erfindung können den Unteransprüchen entnommen werden. Im folgenden ist die Erfindung an Hand der Berechnung des Verhältnisses zwischen den Massen für einen Fahrzeugzug beschrieben, wobei das Zugfahrzeug zweiachsig ist und wobei die Hinterachse des Zugfahrzeugs angetrieben ist.

Die Neigungskonstante mk ist abhängig von der Gesamtmasse m des Fahrzeugzuges, der Achslast der angetriebenen Achse P_HA - hier die Hinterachse HA - des Zugfahrzeugs und einer Reifenkonstante k_HA. Die Neigungskonstante läßt sich dann darstellen als

$$mk = \frac{m}{\frac{P\_HA}{k\_HA}}.$$

Der Parameter a spiegelt die Relation der statischen Achslasten des Zugfahrzeugs wider und ist insbesondere bei schweren Nutzfahrzeugen signifikant vom Beladungszustand abhängig und wird nicht durch Bremskräfte des Anhängerfahrzeugs beeinflußt. Die Achslasten P_VA und P_HA der Vorderachse bzw. der angetriebenen Hinterachse des Zugfahrzeugs haben jeweils eine zugehörige Reifenkonstante k_VA bzw. k_HA. Weil die Verteilungskonstante a als Bremsdruckverhältnis p_VA/p_HA zwischen dem Bremsdruck p_VA an der Vorderachse und dem Bremsdruck p_HA an der Hinterachse definiert ist, ist noch ein Umrechnungsfaktor nötig, damit man die benötigte Bremskraftrelation erhält. Bei gleichen Radbremsen an der Vorderachse VA und der angetriebenen Hinterachse HA entspricht dieser Umrechnungsfaktor dem Bremszylinderkraftverhältnis f_MZ. Daraus folgt für die Verteilungskonstante a:

$$a = f\_MZ \times \frac{\frac{P\_VA}{k\_VA}}{\frac{P\_HA}{k\_HA}}.$$

Da sich die Masse des Zugfahrzeugs m_zfg aus der Summe der Achslasten des Zugfahrzeugs, also nach m_zfg=P_VA+P_HA, ergibt, ergibt sich aus den voranstehenden Gleichungen, daß das Verhältnis m/m_zfg zwischen der Masse des Fahrzeugzuges und der Masse des Zugfahrzeugs nach folgender Gleichung berechnet werden kann:

$$\frac{m}{m\_zfg} = \frac{mk}{a \cdot f\_MZ \cdot k\_VA + k\_HA}.$$

Diese Gleichung enthält neben den ermittelten Größen Verteilungskonstante a und Neigungskonstante mk nur den Parameter f_MZ, der konstruktiv bedingt und daher bekannt ist, und die Reifenkonstanten k_VA und K_HA. Diese können experimentell ermittelt werden und als Kennwerte abgespeichert sein. Im Solobetrieb des Nutzfahrzeugs kann eine Anpassung der abgespeicherten Kennwerte dadurch vorgenommen werden, daß ein Abgleich der Werte für k_VA und k_HA solange durchgeführt wird, bis das Verhältnis m/m_zfg≡1 ist.

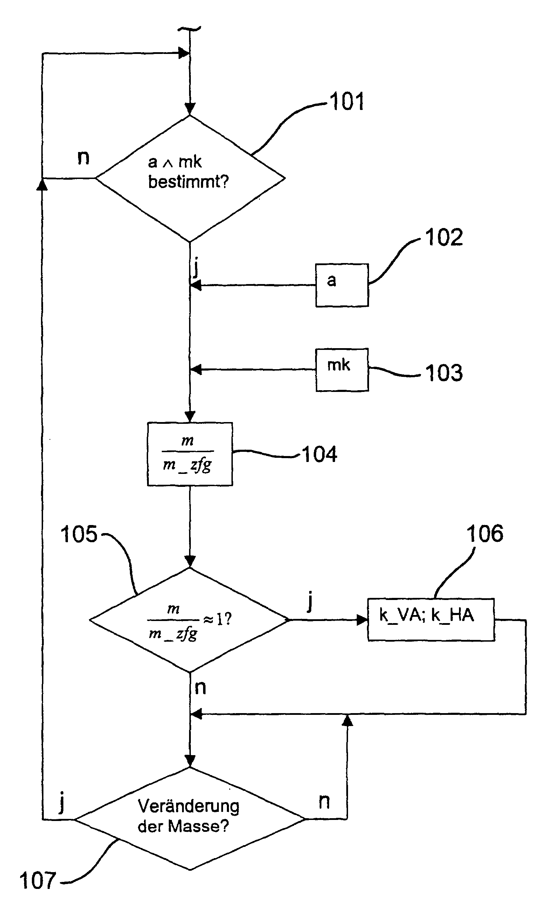

Im übrigen ist die Erfindung an Hand eines in der Zeichnung dargestellten Ausführungsbeispieles nachfolgend noch erläutert; dabei zeigt die einzige Figur das Blockdiagramm eines erfindungsgemäßen Verfahrens.

Bei Fahrtbeginn, nach dem Anlassen des Motors, wird im Schritt 101 überprüft, ob die Verteilungskonstante a und die Neigungskonstante mk für die aktuelle Fahrt schon bestimmt sind. Solange dies nicht geschehen ist, wird eine Warteschleife durchgeführt, bis die Bestimmung der Werte für die Fahrt erfolgt ist. Sobald die aktuellen Werte bestimmt sind, wird gemäß dem Schritt 102 die Verteilungskonstante a und gemäß dem Schritt 103 die Neigungskonstante mk eingelesen. Gemäß dem Schritt 104 wird dann das Verhältnis m/m_zfg zwischen der Masse des Fahrzeugzuges und der Masse des Zugfahrzeugs ermittelt. Im Schritt 105 wird dann überprüft, ob das Verhältnis ungefähr den Wert 1 aufweist. Liegt es beispielsweise bei 0,9 oder allgemein bei Werten kleiner als 1,10, so wird darauf geschlossen, daß kein Anhängerfahrzeug vorhanden ist. In diesem Fall wird dann im Schritt 106 ein Abgleich durchgeführt, wobei die Werte für die Reifenkonstanten k_VA und k_HA so bestimmt werden, daß das Verhältnis m/m_zfg den Wert 1 annimmt. Es wird zum Schritt 107 gesprungen, zu dem auch gesprungen wird, wenn im Schritt 105 festgestellt wurde, daß das Verhältnis m/m_zfg nicht ungefähr gleich 1 ist. Im Schritt 107 wird überprüft, ob ein Ereignis eingetreten ist, das darauf schließen läßt, daß das Verhältnis m/m_zfg sich verändert hat. Ein solches Ereignis kann beispielsweise in einer Stillstandszeit des Fahrzeugs angesehen werden, die ausreichend groß ist, um einen Sattelanhänger auf- oder abzusatteln, Fahrzeuge an- oder abzuhängen, Wechselcontainer aufzunehmen oder abzusetzen oder eine Be- oder Entladung von Pritschen oder Kipperfahrzeugen durchzuführen. Dies gilt insbesondere auch für Standzeiten, währen derer die Feststellbremse des Fahrzeugs betätigt wurde. Auch Veränderungen der Drehzahldifferenzen in den Hochschaltpausen, eine Veränderung des Werts der Neigungskonstanten mk kann auf eine Veränderung der Beladung des Fahrzeugs hinweisen. Wird ein solches Ereignis nicht festgestellt, so wird in einer Schleife wieder die Abfrage von Schritt 107 durchgeführt. Dies geschieht solange, bis entweder der Fahrzeugmotor ausgeschaltet wird oder ein Ereignis, das auf die Veränderung der Massenrelation m/m_zfg hindeutet festgestellt wird. Dann wird zum Schritt 101 zurückgesprungen, wobei gleichzeitig eine Aktualisierung bzw. Neubestimmung der Verteilungskonstanten a und der Neigungskonstanten mk veranlaßt werden muß.

**Patentansprüche**

1. Verfahren zur Bestimmung des Verhältnisses (m/m_zfg) zwischen der Masse (m) eines Fahrzeugzuges und der Masse des Zugfahrzeugs (m_zfg), wobei an dem Zugfahrzeug die Bremskraftverteilung ($\phi$) zwischen den Fahrzeugachsen so bestimmt wird,

   - daß während einer Betätigung der Bremse die Raddrehzahlen an den Fahrzeugachsen näherungsweise untereinander gleich sind,
   - wobei die Bremskraftverteilung ($\phi$) zumindest aus einer von der Bremsbetätigung unabhängigen Verteilungskonstante (a) bestimmt wird und
   - wobei zumindest nach Beginn einer Fahrt ein aktueller Wert für die Verteilungskonstante (a) bestimmt wird (Schritt 101),

   **dadurch gekennzeichnet,**
   **daß** zumindest zu Beginn jeder Fahrt eine zur Ermittlung der Neigung der Fahrbahn in Fahrtrichtung dienende Neigungskonstante (mk) bestimmt wird (Schritt 101), und daß das Verhältnis zwischen der Masse des Fahrzeugzuges (m) und der Masse des Zugfahrzeuges (m_zfg) unter Verwendung von fahrzeugspezifischen Parametern (f_MZ, k_VA, k_HA) aus dem Verhältnis von Neigungskonstante (mk) und Verteilungskonstante (a) ermittelt wird (Schritt 104).

2. Verfahren nach Anspruch 1,
   **dadurch gekennzeichnet,**
   **daß** die Neigungskonstante (mk) aus gemessenen Werten der Raddrehzahlen von Rädern einer angetriebenen Achse und von Rädern einer nicht angetriebenen Achse ermittelt wird.

3. Verfahren nach einem der Ansprüche 1 oder 2,
   **dadurch gekennzeichnet,**
   **daß** die Verteilungskonstante (a) aus gemessenen Werten der Raddrehzahlen von Rädern einer angetriebenen Achse und von Rädern einer nicht angetriebenen Achse ermittelt wird.

4. Verfahren nach Anspruch 1,
   **dadurch gekennzeichnet,**
   **daß** mindestens ein fahrzeugspezifischer Parameter (k_VA,k_HA) im hängerlosen Betrieb des Zugfahrzeugs ermittelt wird (Schritt 106).

5. Verfahren nach Anspruch 4,
   **dadurch gekennzeichnet,**
   **daß** die im hängerlosen Betrieb ermittelten Parameter die Reifenkonstanten (k_VA, k_HA) sind (Schritt 106).

6. Verfahren nach Anspruch 4,
   **dadurch gekennzeichnet,**
   **daß** die im hängerlosen Betrieb ermittelten Parameter durch Abgleich bestimmt werden, wobei die Parameter so bestimmt werden, daß das Verhältnis (m/m_zfg) den Wert "eins" annimmt.

7. Verfahren nach Anspruch 1,
   **dadurch gekennzeichnet,**
   **daß** das Fahrzeug eine Einrichtung zum Erfassen der Achslast zumindest einer Achse des Zugfahrzeugs aufweist,
   **daß** aus der ermittelten Achslast und aus dem bekannten Leergewicht die Masse des Zugfahrzeugs bestimmt wird und daß aus dem Verhältnis (m/m_zfg) und der Masse des Zugfahrzeugs zumindest die Masse des Fahrzeugzugs ermittelt wird.

8. Verfahren nach Anspruch 7,
   **dadurch gekennzeichnet,**
   **daß** die Achslast aus dem Balgdruck einer Luftfederung des Zugfahrzeugs ermittelt wird.

9. Verfahren nach Anspruch 1,
   **dadurch gekennzeichnet,**
   **daß** das Verhältnis (m/m_zfg) nach der Gleichung

$$\frac{m}{m\_zfg} = \frac{mk}{a \cdot f\_MZ \cdot k\_VA + k\_HA}$$

   ermittelt wird.

10. Verfahren nach Anspruch 1 oder 4,
**dadurch gekennzeichnet,**
**daß** auf eine hängerlose Fahrt des Zugfahrzeugs geschlossen wird, wenn das Verhältnis (m/m_zfg) wenigstens näherungsweise den Wert "Eins " aufweist (Verzweigung j aus Schritt 105).

**Claims**

1. Method of determining the ratio (m/m_zfg) between the mass (m) of a towing assembly and the mass of the towing vehicle (m_zfg),
the brake force distribution ($\phi$) on the towing assembly between the vehicle axles being determined such that

    - when the brake is being operated, the wheel speeds on the vehicle axles are more or less the same as one another,
    - the brake force distribution ($\phi$) being determined on the basis of at least one distribution constant (a) independent of the brake operation, and
    - at least after the beginning of the journey a current value is determined for the distribution constant (a) (step 101),

    **characterised in that**
    at least at the start of every journey, a gradient constant (mk) used to determine the gradient of the road in the direction of travel is determined (step 101) and the ratio between the mass of the towing assembly (m) and the mass of the towing vehicle (m_zfg) is derived, using vehicle-specific parameters (f_MZ, k_VA, k_HA), from the gradient constant (mk) and distribution constant (a) ratio (step 104).

2. Method as claimed in claim 1,
**characterised in that**
the gradient constant (mk) is derived from measured values of the wheel speeds of wheels of a driven axle and wheels of a non-driven axle.

3. Method as claimed in claim 1 or 2,
**characterised in that**
the distribution constant (a) is derived from measured values of the wheels speeds of wheels of a driven axle and wheels of a non-driven axle.

4. Method as claimed in claim 1,
**characterised in that**
at least one vehicle-specific parameter (k_VA, k_HA) is detected when the towing assembly is operating without a trailer (step 106).

5. Method as claimed in claim 4,
**characterised in that**

the parameters determined during operation without a trailer are the tyre constants (k_VA, k_HA) (step 106).

6. Method as claimed in claim 4,
**characterised in that**
the parameters determined during operation without a trailer are determined by adjustment, the parameters being determined so that the ratio (m/m_zfg) assumes the value "one".

7. Method as claimed in claim 1,
**characterised in that**
the vehicle has a system for detecting the axle load of at least one axle of the towing vehicle,
the mass of the towing vehicle being determined from the detected axle load and from the known unladen weight, and at least the mass of the towing assembly is obtained from the ratio (m/m_zfg) and the mass of the towing vehicle.

8. Method as claimed in claim 7,
**characterised in that**
the axle load is determined from the bellows pressure of an air suspension system of the towing vehicle.

9. Method as claimed in claim 1,
**characterised in that**
the ratio (m/m_zfg) is determined using the equation

$$\frac{m}{m\_zfg} = \frac{mk}{a \bullet f\_MZ \bullet k\_VA + k\_HA}.$$

10. Method as claimed in claim 1 or 4,
**characterised in that**
if the ratio (m/m_zfg) assumes the value of at least approximately "one", it is concluded that the towing vehicle is travelling without trailer (branch from step 105)

**Revendications**

1. Procédé pour déterminer le rapport (m/m_zfg) entre la masse (m) d'un train de véhicules et la masse du véhicule tracteur (m_zfg),
selon lequel la distribution de la force de freinage ($\phi$) entre les essieux des véhicules est déterminée au niveau du véhicule tracteur de telle sorte

    - que pendant un actionnement des freins les vitesses de rotation de roues au niveau des essieux des véhicules soient approximativement identiques,
    - selon lequel la distribution ($\phi$) de la force de freinage est déterminée au moins à partir d'une constante de distribution (a) qui est indépendante de l'actionnement des freins, et

- selon lequel au moins après le début d'un déplacement, une valeur actuelle de la constante de distribution (a) est déterminée (pas 101),

**caractérisé en ce que**
qu'au moins au début de chaque déplacement, une constante d'inclinaison (mk) utilisée pour déterminer l'inclinaison de la chaussée dans le sens de déplacement, est déterminée (pas 101), et que
le rapport entre la masse du train de véhicules (m) et la masse du véhicule tracteur (m zfg) est déterminée moyennant l'utilisation de paramètres (f_MZ, k_VA, k_HA), qui sont spécifiques aux véhicules, est déterminé à partir du rapport de la constante d'inclinaison (mk) et de la constante de distribution (a) (pas 104).

2. Procédé selon la revendication 1, **caractérisé en ce que** la constante d'inclinaison (mk) est déterminée à partir des valeurs mesurées des vitesses de rotation de roues d'un essieu moteur et de roues d'un essieu non-moteur.

3. Procédé selon l'une des revendications 1 ou 2, **caractérisé en ce que** la constante de distribution (2) est déterminée à partir des valeurs mesurées des vitesses de rotation de roues d'un essieu moteur et de roues d'un essieu non moteur.

4. Procédé selon la revendication 1, **caractérisé en ce qu'**au moins un paramètre (k_VA, k_HA) spécifique aux véhicules est déterminé lors du fonctionnement du véhicule tracteur sans remorque (pas 106).

5. Procédé selon la revendication 4, **caractérisé en ce que** les paramètres déterminés lors du fonctionnement sans remorqu, sont les constantes des pneumatiques (k_VA, k_HA) (pas 106).

6. Procédé selon la revendication 4, **caractérisé en ce que** les paramètres déterminés pendant le fonctionnement sans remorque sont déterminés par l'équilibrage, les paramètres étant déterminés de telle sorte que le rapport (m/m_zfg) prenne la valeur "un".

7. Procédé selon la revendication 1, **caractérisé en ce que** le véhicule comporte un dispositif pour détecter la charge d'essieu pour au moins un essieu du véhicule tracteur, que la masse du véhicule tracteur est déterminée à partir de la charge d'essieu déterminée et du poids à vide connu, et qu'au moins la masse du train de véhicules est déterminée à partir du rapport (m/m_zfg) et à partir de la masse du véhicule tracteur.

8. Procédé selon la revendication 7, **caractérisé en ce que** la charge d'essieu est déterminée à partir de la pression de soufflet d'une suspension pneumatique du véhicule tracteur.

9. Procédé selon la revendication 1, **caractérisé en ce que** le rapport (m/m_zfg) est déterminé conformément à la relation

$$\frac{m}{m\_zfg} = \frac{mk}{a \cdot f\_MZ \cdot k\_VA + k\_HA}$$

10. Procédé selon la revendication 1 ou 4, **caractérisé en ce qu'**on conclut à un déplacement du véhicule tracteur sans remorque lorsque le rapport (m/m_zfg) possède au moins approximativement la valeur "un" (embranchement à partir du pas 105).